# EUROPÄISCHE PATENTANMELDUNG

(11) **EP 0 887 229 A2**
(43) Veröffentlichungstag der Anmeldung: **30.12.1998**
(21) Anmeldenummer: 98108580.6
(22) Anmeldetag: 12.05.1998
(51) Int. Cl.: B60Q 1/12

(54) **Verfahren und Vorrichtung zum automatischen Ausrichten eines Scheinwerfers**

(30) Priorität: 28.06.1997 DE 19727593
(71) Anmelder: Volkswagen Aktiengesellschaft, 38436 Wolfsburg (DE)
(72) Erfinder: Mai, Rudolf, 38442 Wolfsburg (DE); Stoll, Klaus, 85055 Ingolstadt (DE); Leemann, Christoph, 85051 Ingolstadt (DE)

(57) **Zusammenfassung**

Die Erfindung bezieht sich auf ein Verfahren und eine Vorrichtung zum automatischen Ausrichten der Hauptachse (6) des Lichtkegels eines Fahrzeugscheinwerfers (13) bei Kurvenfahrten, wobei die Hauptachse (6) des Lichtkegels wenigstens in Abhängigkeit von einer Fahrbewegung des Fahrzeuges eingestellt wird.

Erfindungsgemäß wird die einzustellende Richtung der Hauptachse (6) in Abhängigkeit von einer momentanen Position (3) und von einer erwarteten Position (4) des Fahrzeuges (1) auf dem Streckenverlauf einer vom Fahrzeugführer gewählten Fahrtroute bestimmt.

## Beschreibung

Die Erfindung bezieht sich auf ein Verfahren und eine Vorrichtung zum automatischen Ausrichten der Hauptachse des Lichtkegels mindestens eines Fahrzeugscheinwerfers bei Kurvenfahrten.

Der Scheinwerfer eines Fahrzeugs soll den vor dem Fahrzeug liegenden Fahrweg so ausleuchten, daß der Fahrer jederzeit den Überblick über die Fahrstrecke hat und insbesondere rechtzeitig Gefahren auf der Strecke erkennt und entsprechend reagieren kann. Die Ausleuchtung der Fahrstrecke vor dem Fahrzeug ist aber in der Regel dann nicht mehr gegeben, wenn das Fahrzeug eine Kurve durchfährt, der Scheinwerfer leuchtet die tangential vor dem Fahrzeug liegende Fläche aus, während der Fahrzeugführer die Situation auf der weiter innen liegenden Seite der Kurve kennen muß.

Zur Lösung diese Problems wird in der deutschen Patentanmeldung DE 195 49 077 ein Scheinwerfer mit veränderlicher Lichtverteilung vorgeschlagen. Der Scheinwerfer umfaßt einen Reflektor, der durch eine 10 bis 30 mm über der optischen Achse der Lichtquelle und des Reflektors angeordnete horizontale Linie in einen oberen beweglichen Lichtverteilungsreflektor und einen unteren Lichtverteilungsreflektor unterteilt ist, von denen der besagte bewegliche Lichtverteilungsreflektor um eine vertikale Drehachse drehbar ist, welche die optische Achse der Lichtquelle praktisch kreuzt, und der besagte feststehende Lichtverteilungsreflektor so gestaltet ist, daß er 50 bis 60 % der dem Reflektor zugeführten Gesamtlichtmenge reflektiert. Der obere bewegliche Lichtverteilungsreflektor wird in Abhängigkeit von erfaßten Schwenkbewegungen des Fahrzeugs bewegt, die aus dem Drehwinkel des Lenkrades und anderen Daten des Kraftfahrzeugs abgeleitet werden.

Ein ähnliches Problem tritt bei größeren Längsneigungen der Fahrbahn auf.

Es ist aber wünschenswert, daß der Lichtkegel des Scheinwerfers darüber hinaus bereits vor einer eigentlichen Querbewegung oder Nickbewegung des Fahrzeugs in die gewünschte Richtung eingeschwenkt wird, so daß die Fahrbahn in jedem Augenblick der Fahrt optimal ausgeleuchtet wird.

Aus der deutschen Patentanmeldung 196 49 137 ist ein Verfahren zur Regelung des dynamischen Verhaltens eines Kraftfahrzeugs bekannt, bei dem die Kurvenradien der befahrenen Strecke aus abgespeicherten Datensätzen übernommen oder berechnet werden.

Aufgabe der vorliegenden Erfindung ist es, ein Verfahren und eine Vorrichtung anzugeben, womit die Hauptachse eines Lichtkegels mindestens eines Fahrzeugscheinwerfers so eingestellt wird, daß die vor dem Fahrzeug liegende Fahrstrecke optimal ausgeleuchtet wird.

Diese Aufgabe wird durch ein Verfahren mit den Merkmalen nach Anspruch 1 und eine Vorrichtung mit den Merkmalen nach Anspruch 7 gelöst. Die Unteransprüche beziehen sich auf jeweils vorteilhafte Ausführungsformen.

Das erfindungsgemäße Verfahren bei dem die Hauptachse in Abhängigkeit von einer Fahrbewegung des Fahrzeugs eingestellt wird, ist gekennzeichnet durch das Bestimmen der einzustellenden Richtung der Hauptachse in Abhängigkeit von einer momentanen Position und von einer erwarteten Position des Fahrzeugs auf dem Streckenverlauf der gewählten Fahrtroute.

Vorzugsweise wird die momentane Position von einem GPS-Empfänger erfaßt.

Der Streckenverlauf der Fahrtroute des Fahrzeugs wird dagegen aus den Datensätzen einer digitalisiert abgespeicherten Karte ermittelt. Vorzugsweise ist die digitalisierte Karte auf CD gespeichert.

In einer weiteren bevorzugten Ausführungsform werden die Längsneigung, die Krümmungsverläufe, die Kurvenradien oder Kombinationen aus diesen Großen des Streckenverlaufs der Fahrtroute über einen aktivierbaren Lernvorgang abgespeichert, wobei die Krümmungsverläufe oder die Kurvenradien über die Raddrehzahldifferenz der inneren und äußeren Räder des Fahrzeuges ermittelt werden.

Bei einer Ausführungsform des Verfahrens wird die erwartete Position des Fahrzeuges in Abhängigkeit eines Krümmungsverlaufs oder des Kurvenradius der Fahrtroute und der momentanen Fahrgeschwindigkeit bestimmt. Zusätzlich kann die Längsneigung der Straße in einer weiteren Ausführungsform bei der Ermittlung der erwarteten Fahrzeugposition mitberücksichtigt werden.

Die erfindungsgemäße Vorrichtung zum automatischen Ausrichten der Hauptachse eines Lichtkegels, mit mindestens einem Stellelement zum Ändern der Hauptachse eines Lichtkegels des Scheinwerfers, ist gekennzeichnet durch eine Speichervorrichtung zum Abspeichern eines Streckenverlaufs einer gewählten Fahrtroute, eine Erfassungseinrichtung zum Erfassen der momentanen Position des Fahrzeuges und eine Steuereinrichtung zum Ermitteln eines Stellsignals für das Stellelement in Abhängigkeit der momentanen Position und einer auf dem Streckenverlauf erwarteten Position des Fahrzeuges.

Nach einer Ausbildung der erfindungsgemäßen Vorrichtung, werden die Mittel eines im Fahrzeug vorhandenen Navigationssystems zur Ermittlung der momentanen und der erwarteten Position des Fahrzeuges verwendet.

In einer weiteren Ausführungsform ist vorgesehen, daß während eines Lernvorgangs der Streckenverlauf mit Krümmungsverläufen, Kurvenradien, Längsneigungen oder Kombinationen dieser Größen einer gewählten Fahrtroute abgespeichert wird. Auf diesen ist dann beim wiederholten Befahren des jetzt bekannten Streckenverlaufs rückgreifbar.

Gemäß einer Ausbildung sind die Krümmungsverläufe oder Kurvenradien mittels an den inneren und äußeren Rädern des Fahrzeuges angeordneten Raddrehzahlsensoren ermittelbar.

Aus damit bekannten Krümmungsverläufen oder Kurvenradien und der momentanen Fahrgeschwindigkeit kann die erwartete Position des Fahrzeuges ermittelt werden.

Das erfindungsgemäße Verfahren und die erfindungsgemäße Vorrichtung haben gegenüber dem Stand der Technik den Vorteil, daß die Ausleuchtung anders als beim Stand der Technik nicht von am Fahrzeug unmittelbar gemessenen Daten, wie Einschlagwinkel des Lenkrades, Querbeschleunigung oder Längsneigung abhängt, die nur ein Nachführen des Scheinwerfers aber kein antizipierendes Einstellen des Scheinwerfers ermöglichen. Mit Hilfe der Erfindung erfolgt die Ausleuchtung der Fahrbahn auch bereits dann, wenn das Fahrzeug erst gerade in die Kurvenfahrt übergeht oder auf eine Längsneigung der Fahrbahn zufährt.

Die Erfindung wird zum besseren Verständnis im folgenden unter Angabe weiterer Merkmale und Vorteile anhand eines Ausführungsbeispiels näher beschrieben. Die zugehörigen Zeichnungen zeigen:
- Fig. 1: zeigt eine Fahrsituation in einer Kurve eines Fahrzeugs zur Erläuterung des erfindungsgemäßen Verfahrens und
- Fig. 2: ein Ausführungsbeispiel einer erfindungsgemäßen Vorrichtung.

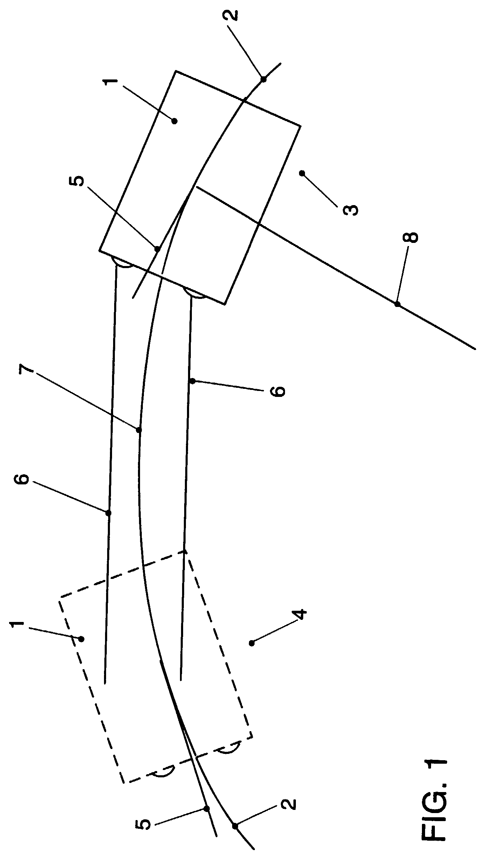

In der in Fig. 1 gezeigten Fahrsituation ist ein Fahrzeug 1 an zwei Positionen auf der Fahrtroute 2 dargestellt. Die momentane Position 3 ist normal dargestellt, während die erwartete Position 4 gestrichelt gezeigt ist. In beiden Positionen ist die Fahrzeuglangsachse 5 tangential zu der Fahrtroute 2 ausgerichtet. Daher ist bei einem Fahrzeug ohne aktive Einstellung der Scheinwerfer die Richtung der Lichtkegel tangential zu der Kurve.

In der in Fig. 1 dargestellten Fahrsituation ist der Scheinwerfer des Fahrzeugs 1 so eingestellt, daß die beiden Hauptachsen 6 der Lichtkegel, die von den Scheinwerfern ausgehen, nicht mehr tangential zu der Fahrtroute verlaufen, sondern den Streckenverlauf 2 im wesentlichen bei der erwarteten Position 4 schneiden.

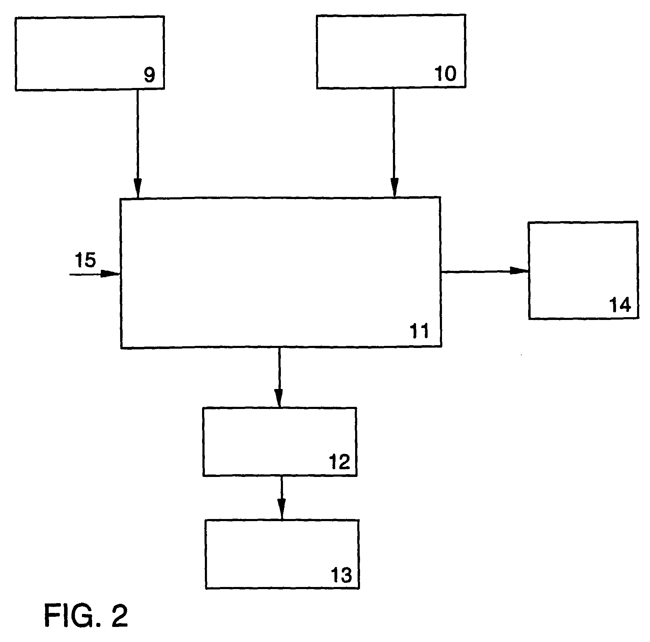

Der Einstellwinkel wird aus der erwarteten Position 4 und einer momentanen Position 3 des Fahrzeuges bestimmt. Die momentane Position 3 wird dabei vorzugsweise über einen GPS-Empfänger (Global Positioning System) (Fig. 2) ermittelt, der im Fahrzeug 1 eingebaut ist. Sie kann aber auch aus der Eingabe eines Anfangspunktes durch den Fahrer und der fortlaufenden Erfassung der Fahrdaten ermittelt werden.

Die erwartete Position 4 ist so definiert, daß die erwartete Position 4 im wesentlichen einem Punkt auf dem Streckenverlauf 2 entspricht, den das Fahrzeug innerhalb einer vorgegebenen Zeitspanne erreicht.

Zur Bestimmung der erwarteten Position 4 stehen verschiedene Möglichkeiten zur Verfügung. In Fig. 2 wird in der zentralen Steuerungseinrichtung 11 die Menge aller erwarteten Positionen aus abgespeicherten Daten über den vor dem Fahrzeug liegender Streckenverlauf 2 bestimmt. So wird also z. B. ein Streckenverlauf einer ausgewählten Fahrroute aus der digitalisierten Karte 10 abgelesen. Diese digitalisierte Karte 10 ist vorzugsweise auf einer CD abgespeichert die von der Steuerungseinrichtung 11 gelesen werden kann. Die ausgelesenen Datensätze der digitalisierten Karte 10 können zusätzlich auch für den Fahrer auf einer Anzeigeeinheit 14 angezeigt werden. Die zentrale Steuerungseinrichtung 11 ermittelt aus den eingelesenen Daten die Ortskurve des Streckenverlaufs 2. Auf dieser Ortskurve liegt die erwartete Position 4.

Im Ausführungsbeispiel wird in der zentralen Steuerungseinrichtung 11 die erwartete Position 4 auf der Ortskurve durch Verknüpfung eines Krümmungsverlaufs 7 der Ortskurve des Streckenverlaufs 2 mit der momentanen Geschwindigkeit bestimmt. Aus der erwarteten Position 4, und aus der momentanen Position 3 des Fahrzeuges wird das Stellsignal für die Stelleinrichtung 12 bestimmt, um den um die Hauptachse des Lichtkegel des Scheinwerfers 13 in eine solche Position zu bringen, daß der Scheinwerfer die erwartete Position ausleuchtet.

Durch die Verknüpfung des Krümmungsverlaufs 7 mit der Fahrzeuggeschwindigkeit 15 wird eine geschwindigkeitsabhängige Einstellung des Scheinwerfers erreicht. Mit anderen Worten, wenn sich das Fahrzeug mit einer Geschwindigkeit von ca. 100 km/h bewegt, so beträgt der Einstellwinkel für den Scheinwerfer 13 z. B. 5°. Dieser Einstellwinkel sinkt auf z. B. 3°, wenn das Fahrzeug eine Geschwindigkeit von nur 70 km/h hat. Dadurch ist die Ausleuchtung der Fahrtroute bei Kurvenfahrt zusätzlich abhängig von den aktuellen Fahrdaten, was dem Fahrer ein größeres Gefühl der Sicherheit gibt.

Bei einer weiteren bevorzugten Ausführungsform der Erfindung werden die Streckenverläufe 2 der vom Fahrzeugführer ausgewählten Fahrtrouten 2, insbesondere häufig befahrene Fahrtrouten während der Fahrt gespeichert, so daß bei einer späteren Fahrt auf derselben Fahrtroute 2 auf dieselben Daten zurückgegriffen werden kann. Insbesondere können auch Informationen über den zeitlichen Ablauf der Fahrt auf der gespeicherten Fahrtroute mit abgespeichert werden.

### LISTE DER BEZUGSZEICHEN

- 1: Fahrzeug
- 2: Streckenverlauf
- 3: momentane Fahrzeugposition
- 4: erwartete Fahrzeugposition
- 5: Fahrzeugachse
- 6: Hauptachse des Lichtkegels
- 7: Krümmungsverlaufs der Fahrtroute
- 8: Kurvenradius der Fahrtroute
- 9: Erfassungseinrichtung
- 10: digitale Karte
- 11: Steuerungseinrichtung
- 12: Stelleinrichtung
- 13: Fahrzeugscheinwerfer
- 14: Anzeige
- 15: Fahrgeschwindigkeit

## Patentansprüche

1. Verfahren zum automatischen Ausrichten der Hauptachse des Lichtkegel mindestens eines Fahrzeugscheinwerfers, wobei die Hauptachse des Lichtkegels wenigstens in Abhängigkeit von einer Fahrbewegung des Fahrzeuges eingestellt wird, dadurch gekennzeichnet, daß die einzustellende Richtung der Hauptachse (6) des Lichtkegels in Abhängigkeit von einer momentanen Position (3) und von einer erwarteten Position (4) des Fahrzeuges (1) auf dem Streckenverlauf (2) einer gewählten Fahrtroute bestimmt wird.

2. Verfahren nach Anspruch 1, dadurch gekennzeichnet, daß die momentane Position (3) von einem GPS-Empfänger (9) erfaßt wird.

3. Verfahren nach Anspruch 1 oder 2, dadurch gekennzeichnet, daß der Streckenverlauf (2) der gewählte Fahrtroute aus einer digitalisiert abgespeicherte Karte (10) abgelesen wird.

4. Verfahren nach einem der Ansprüche 1 bis 3, dadurch gekennzeichnet, daß der Streckenverlauf (2) durch Krümmungsverläufe (7) oder Kurvenradien (8) und/oder Längsneigungen beschrieben wird.

5. Verfahren nach Anspruch 1 oder 2, dadurch gekennzeichnet, daß der Streckenverlauf (2) der gewählten Fahrtroute über einen aktivierbaren Lernvorgang abgespeichert wird.

6. Verfahren nach Anspruch 5, dadurch gekennzeichnet, daß der Streckenverlauf (2) durch Krümmungsverläufe (7) oder Kurvenradien (8) beschrieben wird und die Krümmungsverläufe oder Kurvenradien über die Raddrehzahldifferenz des inneren und äußeren Rades des Fahrzeuges ermittelt werden.

7. Verfahren nach Anspruch 6, dadurch gekennzeichnet, daß der Streckenverlauf zusätzlich durch Längsneigungen beschrieben wird.

8. Verfahren nach einem der Ansprüche 1 bis 7, dadurch gekennzeichnet, daß die erwartete Position (4) des Fahrzeuges in Abhängigkeit von einem Krümmungsverlauf (7) oder einem Kurvenradius (8) und/oder einer Längsneigung und der momentanen Fahrgeschwindigkeit (15) bestimmt wird.

9. Vorrichtung zum automatischen Ausrichten mindestens eines Scheinwerfers eines Fahrzeuges, mit mindestens einem Stellelement zum Ändern der Hauptachse eines Lichtkegels des Scheinwerfers, dadurch gekennzeichnet, daß eine Speichervorrichtung (10) zum Abspeichern eines Streckenverlauf (2) einer gewählten Fahrtroute, eine Erfassungseinrichtung (9) zum Erfassen der momentanen Position des Fahrzeuges und eine zentrale Steuereinrichtung (11) zum Ermitteln eines Stellsignals für das Stellelement (12) in Abhängigkeit der momentanen Position (3) und einer auf dem Streckenverlauf (2) erwarteten Position (4) des Fahrzeuges vorgesehen ist.

10. Vorrichtung nach Anspruch 9, dadurch gekennzeichnet, daß die Erfassungseinrichtung (9) einen GPS-Empfänger umfaßt.

11. Vorrichtung nach Anspruch 9 oder 10, dadurch gekennzeichnet, daß der Streckenverlauf (2) der ausgewählten Fahrtroute von der Steuereinrichtung (11) aus digital abgespeicherten Datensätzen (10) ermittelbar ist.

12. Vorrichtung nach Anspruch 9 oder 10, dadurch gekennzeichnet, daß der Streckenverlauf (2) einer Fahrtroute über einen aktivierbaren Lernvorgang von der zentralen Steuereinrichtung (11) lernbar ist.

13. Vorrichtung nach Anspruch 10, dadurch gekennzeichnet, daß der gelernte Streckenverlauf in der Speichereinrichtung (10) ablegbar und aus dieser von der zentralen Steuereinrichtung (11) aufrufbar ist.

14. Vorrichtung nach einem der Ansprüche 9 bis 13, dadurch gekennzeichnet, daß der Streckenverlauf der ausgewählten Fahrroute durch Krümmungsverläufe oder Kurvenradien und/oder durch Längsneigungen gekennzeichnet ist und die erwartete Position des Fahrzeuges in Abhängigkeit der Krümmungsverläufe oder der Kurvenradien und/oder der Längsneigungen und der momentanen Fahrgeschwindigkeit bestimmt ist.
